# EUROPEAN PATENT APPLICATION

(11) **EP 4 640 782 A1**
(43) Date of publication of application: **29.10.2025**
(21) Application number: 23907400.8
(22) Date of filing: 07.11.2023
(51) Int. Cl.: C09J 175/04, C09J 163/00, C09J 11/00, C09D 175/04, C09D 163/00, C09D 7/40, C08L 75/04, C08L 63/00, C08G 18/44, C08G 18/76

(54) **ADHESIVE COATING COMPOSITION FOR ELECTRICAL STEEL SHEET, ELECTRICAL STEEL SHEET LAMINATE, AND METHOD FOR MANUFACTURING SAME**

(30) Priority: 21.12.2022 KR 20220180224
(71) Applicant: POSCO Co., Ltd, Pohang-si, Gyeongsangbuk-do 37859 (KR)
(72) Inventor: HA, Bongwoo, Pohang-si, Gyeongsangbuk-do 37859 (KR); LEE, Donggyu, Pohang-si, Gyeongsangbuk-do 37859 (KR); KIM, Jungwoo, Pohang-si, Gyeongsangbuk-do 37859 (KR); NO, Taeyoung, Pohang-si, Gyeongsangbuk-do 37859 (KR); JANG, Jinyoung, Pohang-si, Gyeongsangbuk-do 37859 (KR)
(74) Representative: Meissner Bolte Partnerschaft mbB
(86) International application number: PCT/KR2023/017729
(87) International publication number: WO 2024/136114

(57) **Abstract**

An electrical steel plate adhesive coating composition according to an embodiment includes a mixed resin of an urethane resin and an epoxy resin, wherein the urethane resin includes a repeating unit represented by Chemical Formula 1 and Chemical Formula 2.

## Description

### BACKGROUND OF THE INVENTION

### (a) Field of the Invention

An embodiment of the present invention relates to an adhesive coating composition for an electrical steel sheet, an electrical steel sheet structure, and a method for manufacturing the same. Specifically, one embodiment of the present invention relates to an adhesive coating composition for the electrical steel sheet that forms a fusion layer capable of bonding (fastening) an electrical steel sheet without using conventional fastening methods such as a welding, a cramping, and an interlocking, an electrical steel sheet structure, and a method for manufacturing the same. More specifically, one embodiment of the present invention relates to an adhesive coating composition for an electrical steel sheet, an electrical steel sheet structure, and a method for manufacturing the same, which improve an adhesive strength and a noise suppression characteristic of the electrical steel sheet structure by controlling the components of the fusion layer formed between the electrical steel sheets.

### (b) Description of the Related Art

A non-oriented electrical steel is a steel sheet with uniform magnetic properties in all directions on a rolled sheet, and is widely used in motors, generator cores, electric motors, and small transformers.

The electrical steel sheets may be divided into two types: those that must undergo a stress relief annealing (SRA) after a punching to improve magnetic properties, and those that omit the stress removal annealing when a cost loss due to a heat treatment is greater than the magnetic properties effect of the stress removal annealing.

An insulating film is a film that is coated in the final manufacturing process of structures such as motors, generator cores, electric motors, and small transformers, and is usually required to have electrical properties that suppress a generation of eddy currents. In addition, continuous punching workability, anti-stickiness, and a surface close contacting property are required. The continuous punching workability indicates an ability to suppress the wear of a mold when a plurality of films are stacked into an iron core after a punching process is performed to have a predetermined shape. The anti-stickiness indicates an ability of not allowing iron core steel sheets to closely stick to each other after a stress relief annealing process for relieving machining stress of a steel sheet to recover a magnetic characteristic.

In addition to such basic characteristics, excellent application workability of a coating solution, solution stability such that it is usable for a long period after mixing, and the like are also required. It is required to use an additional fastening method such as welding, clamping, or interlocking when the insulation film is manufactured as an electrical steel sheet structure.

### SUMMARY OF THE INVENTION

### [Technical Problem]

In one embodiment of the present invention, an adhesive coating composition for an electrical steel sheet, an electrical steel sheet structure, and a method for manufacturing the same are provided. Specifically, in one embodiment of the present invention, an adhesive coating composition for an electrical steel sheet for forming a fusion layer capable of bonding (fastening) the electrical steel sheet without using conventional fastening methods such as welding, cramping, and interlocking, an electrical steel sheet structure, and a method for manufacturing the same are provided. More specifically, the present invention provides an adhesive coating composition for an electrical steel sheet, an electrical steel sheet structure, and a method for manufacturing the same, which improve the adhesive strength between the electrical steel sheets by controlling the components of the fusion layer formed between the electrical steel sheets.

### [Technical Solution]

An adhesive coating composition for the electrical steel sheet according to one embodiment of the present invention comprises a mixed resin of a urethane resin and an epoxy resin, wherein the urethane resin includes a repeating unit represented by Chemical Formula 1 and Chemical Formula 2. 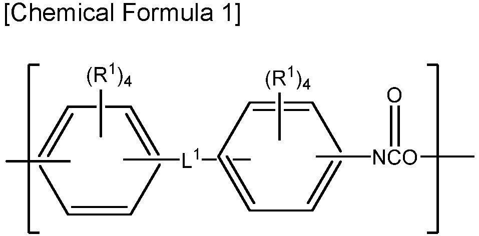 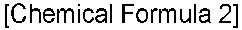 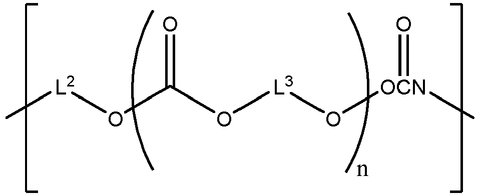 (In Chemical Formula 1 and Chemical Formula 2, R¹ each independently represents hydrogen, deuterium, a substituted or unsubstituted C1 to C10 alkyl group, a substituted or unsubstituted C6 to C20 aryl group, a substituted or unsubstituted C5 to C20 heteroaryl group, a hydroxy group, or a halogen element. L¹, L², and L³ represent a single bond or a divalent linker, respectively. n represents an integer from 1 to 50.)

20 to 80 parts by weight of the urethane resin and 20 to 80 parts by weight of the epoxy resin may be included based on 100 parts by weight of the mixed resin.

The urethane resin may include a repeating unit represented by Chemical Formula 3 and Chemical Formula 2. 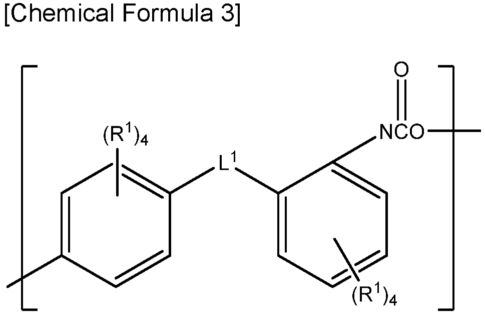 (In Chemical Formula 3, R¹ each independently represents hydrogen, deuterium, a substituted or unsubstituted C1 to C10 alkyl group, a substituted or unsubstituted C6 to C20 aryl group, a substituted or unsubstituted C5 to C20 heteroaryl group, a hydroxy group, or a halogen element. L¹ represents a single bond or a divalent linker).

The urethane resin is formed by the reaction of a diisocyanate monomer and a polyol represented by Chemical Formula 4. 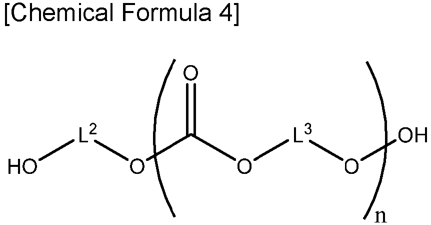 (In Chemical Formula 4 above, L² and L³ each represent a single bond or a divalent linking group. n represents an integer from 1 to 50.)

The diisocyanate monomer includes an aromatic diisocyanate monomer.

The aromatic diisocyanate monomer is a compound represented by Chemical Formula 5. 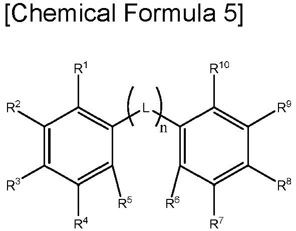 (In Chemical Formula 5, R¹ to R¹⁰ are each independently hydrogen, deuterium, a substituted or unsubstituted C1 to C10 alkyl group, a substituted or unsubstituted C6 to C20 aryl group, a substituted or unsubstituted C5 to C20 heteroaryl group, a hydroxy group, a halogen element, or an isocyanate group,

At least one of R1 to R5 is an isocyanate group.

At least one of R6 to R10 is an isocyanate group.

It may be except when R3 and R8 are both isocyanate groups.
L is a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group, and
n is an integer between 1 and 10.)

The epoxy resin may have a number average molecular weight of 5,000 to 20,000 and a hydroxyl value of 2 to 20 mgKOH/g.

The electrical steel sheet adhesive coating composition according to an embodiment may further include an at least one selected from a group consisting of a coupling agent, a wetting agent, a curing agent, and a curing catalyst.

0.2 to 3 parts by weight of the coupling agent may be included based on 100 parts by weight of the mixed resin.

The curing agent in an amount of 0.5 to 2 parts by weight may be included based on 100 parts by weight of the mixed resin.

0.1 to 1 part by weight of the curing catalyst may be included based on 100 parts by weight of the mixed resin.

0.05 to 0.5 parts by weight of the wetting agent may be included based on 100 parts by weight of the mixed resin.

An electrical steel sheet structure according to an embodiment includes a plurality of electrical steel sheets; and a fusion layer positioned between the plurality of electrical steel plates, wherein the fusion layer includes a mixed resin of urethane resin and epoxy resin, and the urethane resin includes a repeating unit represented by Chemical Formula 1 and Chemical Formula 2. 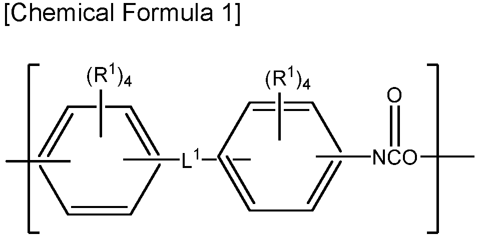 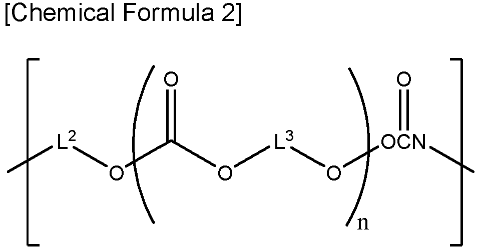
(In the above chemical formulas 1 and 2, R¹ each independently represents hydrogen, deuterium, a substituted or unsubstituted C1 to C10 alkyl group, a substituted or unsubstituted C6 to C20 aryl group, a substituted or unsubstituted C5 to C20 heteroaryl group, a hydroxy group, or a halogen element. L¹, L², L³ represent a single bond or a divalent linker, respectively. n represents an integer from 1 to 50.)
the fusion layer may include 20 to 80 parts by weight of the urethane resin and 20 to 80 parts by weight of the epoxy resin based on 100 parts by weight of the mixed resin.

A method for manufacturing an electrical steel structure according to an embodiment includes coating the adhesive coating composition described in Claim 1 to one or both surfaces of an electrical steel sheet and then curing it to form an adhesive coating layer; and stacking the plurality of electrical steel sheets having the adhesive coating layer formed thereon and thermally fusing them to form a fusion layer.

### [Advantageous Effects]

According to one embodiment of the present invention, the adhesive strength between the electrical steel sheets may be improved by controlling the components of the fusion layer formed between the electrical steel sheets.

According to one embodiment of the present invention, the electrical steel sheets may be bonded without using conventional fastening methods such as welding, clamping, and interlocking, so that the noise and vibration suppression effect of the electrical steel sheet structure is further improved.

In addition, by using the urethane resin with a specific chemical structure, the adhesive strength is excellent even in an automotive transmission oil environment.

### BRIEF DESCRIPTION OF THE DRAWINGS

FIG. 1 is a schematic diagram of an electrical steel sheet structure.
FIG. 2 is a schematic diagram of a cross-section of an electrical steel sheet structure according to one embodiment of the present invention.

### DETAILED DESCRIPTION OF THE EMBODIMENTS

The terms first, second, third, and the like are used to describe various portions, components, regions, layers, and/or sections, but the present invention is not limited thereto. These terms are used only to distinguish any portion, component, region, layer, or section from other portions, components, regions, layers, or sections. Therefore, a first portion, component, region, layer, or section to be described below may be referred to as a second portion, component, region, layer, or section without departing from the scope of the present invention.

The technical terms used herein are used merely for the purpose of describing a specific exemplary embodiment, and are not intended to limit the present invention. Singular expressions used herein include plural expressions unless they have definitely opposite meanings. The terms "comprises" and/or "comprising" used in the specification specify features, regions, integers, steps, operations, elements, and/or components, but do not preclude the presence or addition of other particular features, regions integers, steps, operations, elements, and/or components thereof.

When referring to a part as being "on" or "above" another part, it may be positioned directly on or above another part, or another part may be interposed therebetween. In contrast, when referring to a part being "directly above" another part, no other part is interposed therebetween.

Unless otherwise defined, all terms used herein, including technical or scientific terms, have the same meanings as those generally understood by those with ordinary knowledge in the field of art to which the present invention belongs. Such terms as those defined in a generally used dictionary are to be interpreted to have the same meanings as contextual meanings in the relevant field of art, and are not to be interpreted to have idealized or excessively formal meanings unless clearly defined in the present application.

As used herein, unless otherwise defined, the term "substituted" means that at least one hydrogen in a compound is replaced with a C1 to C30 alkyl group; a C1 to C10 alkoxy group; a silane group; an alkyl silane group; an alkoxysilane group; or an ethylene oxyl group.

As used herein, unless otherwise defined, "hetero" means an atom selected from a group consisting of N, O, S, and P.

The alkyl group may be an alkyl group having a carbon number of C1 to C20, and specifically, may be a lower alkyl group having a carbon number of C1 to C6, a middle alkyl group having a carbon number of C7 to C10, or a higher alkyl group having a carbon number of C11 to C20.

For example, a C1 to C4 alkyl group means that there are 1 to 4 carbon atoms in the alkyl chain, which is selected from the group consisting of methyl, ethyl, propyl, iso-propyl, n-butyl, iso-butyl, sec-butyl and t-butyl.

Typical alkyl groups include methyl, ethyl, propyl, isopropyl, butyl, isobutyl, t-butyl, pentyl, hexyl, cyclopropyl, cyclobutyl, cyclopentyl, and cyclohexyl.

Hereinafter, with reference to the attached drawings, embodiments of the present invention will be described in detail so that a person having ordinary skill in the art to which the present invention pertains can easily implement the present invention. As those skilled in the art would realize, the described embodiments may be modified in various different ways, all without departing from the spirit or scope of the present invention.

An adhesive coating composition for the electrical steel sheet according to one embodiment of the present invention comprises a mixed resin of a urethane resin and an epoxy resin.

Hereinafter, each component is explained.

First, the urethane resin lowers a cross-linking degree of the mixed resin and increases a viscoelastic properties.

In one embodiment of the present invention, by including a urethane resin having a specific chemical structure, a film close contacting property, a peel adhesion, or an ATF resistance of the manufactured electrical steel sheet structure may be improved. Specifically, the urethane resin includes a repeating unit represented by Chemical Formula 1 and Chemical Formula 2. 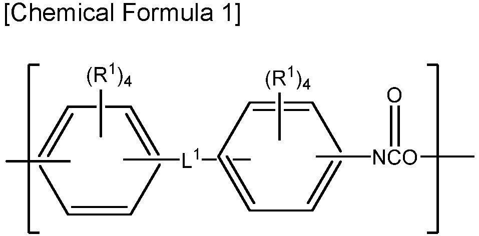 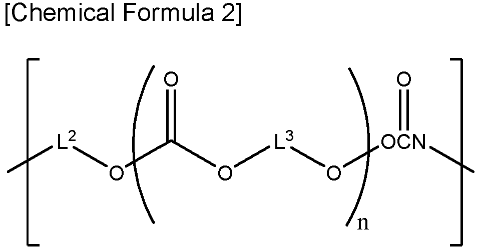 (In Chemical Formula 1 and Chemical Formula 2, R¹ each independently represents hydrogen, deuterium, a substituted or unsubstituted C1 to C10 alkyl group, a substituted or unsubstituted C6 to C20 aryl group, a substituted or unsubstituted C5 to C20 heteroaryl group, a hydroxy group, or a halogen element. L¹, L², and L³ represent a single bond or a divalent linker, respectively. n represents an integer from 1 to 50.

Chemical formula 1 is a chemical structure derived from aromatic diisocyanate, which is used as a raw material in the synthesis process of urethane resin.

Due to the structure of Chemical Formula 1, a heat resistance may be improved due to the hardness characteristic caused by two benzene ring structures in the aromatic diisocyanate.

In Chemical Formula 1, R¹ independently represents hydrogen, deuterium, a substituted or unsubstituted each C1 to C10 alkyl group, a substituted or unsubstituted C6 to C20 aryl group, a substituted or unsubstituted C5 to C20 heteroaryl group, a hydroxy group, or a halogen element. In Chemical Formula 1, R¹ is connected to the inside of the benzene ring, which means that it is substituted at any of six substitution positions of the benzene ring. More specifically, R¹ may each independently be hydrogen, deuterium, or a substituted or unsubstituted C1 to C10 alkyl group. R¹ may each independently be hydrogen or deuterium.

In chemical formula 1, L¹ represents a single bond or a divalent linking group. Specifically, the divalent linking group may be at least one of a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group, -O-, -(CO)-, -S-, -N-, and -P-. More specifically, L1 can be a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group. More specifically, L¹ can be a substituted or unsubstituted C1 to C10 alkylene group.

Specifically, the repeating unit of Chemical Formula 1 may be represented as shown in Chemical Formula 3 below. 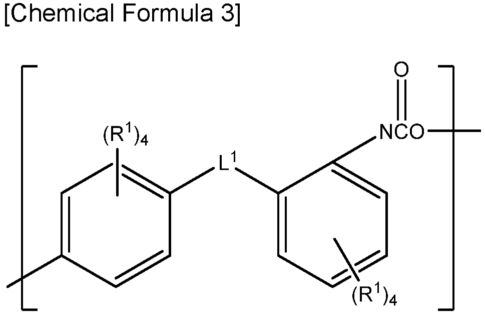 (In Chemical Formula 3, R¹ each independently represents hydrogen, deuterium, a substituted or unsubstituted C1 to C10 alkyl group, a substituted or unsubstituted C6 to C20 aryl group, a substituted or unsubstituted C5 to C20 heteroaryl group, a hydroxy group, or a halogen element. L¹ represents a single bond or a divalent linker.)

As shown in Chemical Formula 3, since the linking group L¹ and the - NCOO- group and the linking group to the other repeating unit are not bonded at symmetrical positions of two benzene rings, the film close contacting property, the peel adhesion, or the ATF resistance of the manufactured electrical steel structure may be further improved.

In Chemical Formula 3, R¹ and L¹ are the same as those described in Chemical Formula 1 above, so the redundant description is omitted.

The repeating unit of Chemical Formula 1 may be included in an amount of 20 to 50 wt% in the urethane resin. If the repeating unit of chemical formula 1 is too small, the problem of reduced high-temperature bonding strength of the urethane resin may occur, and if it is too large, the problem of reduced thermal fusibility may occur. More specifically, the repeating unit of Chemical Formula 1 may be included in an amount of 30 to 40 wt% in the urethane resin. The ratio of the repeating unit of Chemical Formula 1 may be controlled by the ratio of the aromatic diisocyanate monomer added during the manufacture of urethane resin.

Chemical formula 2 is a chemical structure derived from polyol, which is used as a raw material in the synthesis process of urethane resin.

Due to the structure of Chemical formula 2, the thermal fusibility may be improved due to the increase in softness characteristics with a large number of - COO- and -O- structures.

In Chemical Formula 2, L² and L³ each independently represent a single bond or a divalent linking group. Specifically, the divalent linking group may be at least one of a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group, -O-, -(CO)-, -S-, -N-, and -P-. More specifically, L¹ may be a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group. More specifically, L¹ may be a substituted or unsubstituted C1 to C10 alkylene group.

n may be an integer from 1 to 50. If n is too large, problems with a heat resistance aspect may occur. More specifically, n may be from 1 to 20.

The repeating unit of Chemical Formula 2 may be included in an amount of 50 to 80 wt% in the urethane resin. If the repeating unit of chemical formula 2 is too small, the problem of the reduced thermal fusibility may occur. If the repeating unit of Chemical Formula 2 is too large, the problem of reduced high-temperature bonding strength of the urethane resin may occur. More specifically, the repeating unit of Chemical Formula 2 may be included in 60 to 70 wt% of the urethane resin. The ratio of the repeating unit of Chemical Formula 2 may be controlled by the ratio of polyol added during the manufacture of urethane resin.

The urethane resin may be formed by the reaction of a diisocyanate monomer and a polyol represented by Chemical Formula 4.

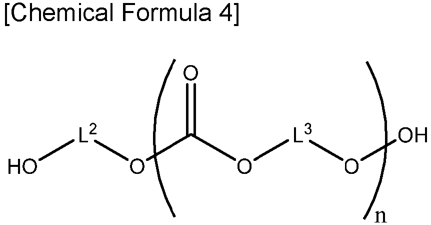

(In Chemical Formula 4 above, L² and L³ each represent a single bond or a divalent linking group. n represents an integer from 1 to 50.

Since the polyol of Chemical Formula 4 has been described in relation to the description of the repeating unit of Chemical Formula 2 in the urethane resin, any redundant description is omitted. L², L³ and n in Chemical Formula 4 are identical to those described in Chemical Formula 2.

The polyol may have a number average molecular weight of 400 to 1000 g/mol. If the molecular weight is too small, problems may arise in terms of the thermal fusibility. If the molecular weight is too large, problems may arise in terms of the heat resistance. More specifically, the number average molecular weight of the polyol may be 500 to 800.

The aromatic diisocyanate monomer may be a compound represented by Chemical Formula 5 below. 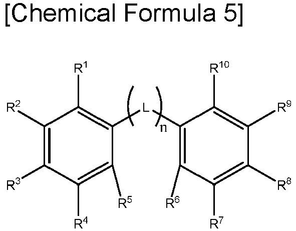
(In Chemical Formula 5, R¹ to R¹⁰ are each independently hydrogen, deuterium, a substituted or unsubstituted C1 to C10 alkyl group, a substituted or unsubstituted C6 to C20 aryl group, a substituted or unsubstituted C5 to C20 heteroaryl group, a hydroxy group, a halogen element, or an isocyanate group,
At least one of R1 to R5 is an isocyanate group.

At least one of R6 to R10 is an isocyanate group.

It is except when R3 and R8 are both isocyanate groups,
L is a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group,
n is an integer between 1 and 10.)

Since the aromatic diisocyanate of Chemical Formula 5 has been described in relation to the description of the repeating unit of Chemical Formula 1 of the urethane resin, any redundant description will be omitted. R1 to R10 of Chemical Formula 5 are identical to the description of R1 of Chemical Formula 1, and L of Chemical Formula 5 is identical to the description of L1 of Chemical Formula 1.

The aromatic diisocyanate monomer may be represented by Chemical Formula 6. 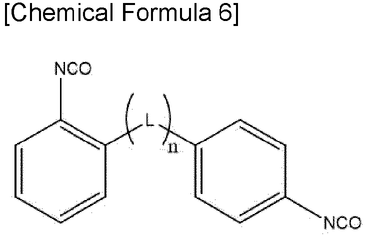 (In Chemical Formula 2, L is a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group.)

More specifically, L may be a substituted or unsubstituted C1 to C10 alkylene group. More specifically, L may be a methylene group. The aromatic diisocyanate monomer may be methylene diphenyl diisocyanate.

The urethane resin may be included in an amount of 20 to 80 parts by weight based on 100 parts by weight of the mixed resin. If the urethane resin content is too small, a vibration suppression effect may be reduced due to the low viscoelastic properties of the mixed resin layer. If too much urethane resin is included, high-temperature adhesion may be degraded due to the low degree of crosslinking of the mixed resin layer. More specifically, the urethane resin may be included in an amount of 30 to 70 parts by weight based on 100 parts by weight of the mixed resin.

In one embodiment of the present invention, an epoxy resin is included together with the urethane resin. The epoxy resin plays a role in improving the high-temperature adhesion by increasing the degree of the cross-linking.

There is no particular limitation on the epoxy resin, but it may include at least one of bisphenol A type epoxy resin, bisphenol E type epoxy resin, cycloaliphatic epoxy, and aliphatic polyglycidyl type epoxy.

The epoxy resin may have a number average molecular weight of 1,000 to 20,000 and a hydroxyl value of 2 to 20 mgKOH/g. The epoxy resin with the appropriate molecular weight and the hydroxyl value are advantageous in terms of the thermal fusibility and the heat resistance. More specifically, the number average molecular weight may be from 5,000 to 15,000, and the hydroxyl value may be from 5 to 15 mgKOH/g.

The adhesive coating composition for the electrical steel sheet according to one embodiment of the present invention may further include at least one selected from the group consisting of a coupling agent, a wetting agent, a curing agent, and a curing catalyst.

The adhesive coating composition for the electrical steel sheet according to one embodiment of the present invention may further include a coupling agent to strengthen the interfacial adhesive strength between the electrical steel sheet 10 and the fusion layer 20. The coupling agent may include a silane coupling agent, and more specifically, at least one of an epoxy-based silane coupling agent and an amino-based silane coupling agent may be included. More specifically, there may be 2(3,4 epoxycyclohexyl) ethyltrimethoxysilane, 3-glycidoxypropyl methyldimethoxysilane, 3-glycidoxypropyl trimethoxysilane, 3-glycidoxypropyl methyldiethoxysilane, 3-glycidoxypropyl triethoxysilane, 3-aminopropyltriethoxysilane, and 3-aminopropyltrimethoxysilane.

When the coupling agent is further included, it may be included in an amount of 0.2 to 3 parts by weight based on 100 parts by weight of the mixed resin. If the coupling agent is included in too little amount, the effect of enhancing the interfacial adhesion between the electrical steel sheet and the fusion layer may not be sufficiently obtained. If the coupling agent is included in too much amount, precipitates may be generated in the adhesive coating composition due to a reaction between the coupling agents. Specifically, it may include 0.2 to 1 part by weight.

The adhesive coating composition for the electrical steel sheet according to one embodiment of the present invention may further include a silicon-based wetting agent in the adhesive coating composition to strengthen the interfacial adhesive strength between the electrical steel sheet 10 and the fusion layer 20. An example of the silicone-based wetting additive may be polyether-modified polydimethylsiloxane. A wetting agent may be added to a bonding composition for electrical steel sheets to enhance the interfacial adhesion between the electrical steel sheets and the bonding layer.

The adhesive coating composition for the electrical steel sheet according to one embodiment of the present invention may include the wetting agent in an amount of 0.05 to 0.5 parts by weight, based on 100 parts by weight of the mixed resin. If the content of the wetting agent is too high, the problem of the defect in the coating layer may occur due to an excessive bubble generation in the coating solution, and if the content of the wetting agent is too low, the problem of the defect in the coating surface may occur due to a reduced wettability of the coating layer. Specifically, it may include 0.05 parts by weight to 0.15 parts by weight.

The adhesive coating composition for the electrical steel sheet according to one embodiment of the present invention may further include a curing agent to control the reactivity of the surface of the adhesive coating layer. The curing agent may include an aliphatic amine, an aromatic amine, an amino amine, or an imidazole. More specifically, a dicyandiamide-based curing agent may be included.

The adhesive coating composition for the electrical steel sheet according to one embodiment of the present invention may include 1 to 10 parts by weight of the curing agent based on 100 parts by weight of the mixed resin. The hardener plays a role in controlling the reactivity of the surface of the adhesive coating layer. If too little hardener is included, the curing reaction of the bonding layer may be reduced, which may result in a stickiness of the fusion layer surface. Conversely, if too much hardener is added, the bonding strength after low-temperature fusion may be reduced. Specifically, it may include 1 to 5 parts by weight.

An adhesive coating composition for the electrical steel sheet according to one embodiment of the present invention may further include a curing catalyst to improve sticky defects caused by non-curing due to rapid curing reaction during coil coating. The curing catalyst may include an imidazole-based curing catalyst.

The adhesive coating composition for the electrical steel sheet according to one embodiment of the present invention may include 0.1 to 5 parts by weight of the curing catalyst based on 100 parts by weight of the mixed resin. If the content of the curing catalyst is too high, a problem of the reduced bonding strength after the fusion may occur due to an over-curing reaction, and if the content of the curing catalyst is too low, a problem of the stickiness of the surface of the fusion layer may occur due to an under-curing. Specifically, it may include 0.5 to 3 parts by weight.

In addition to the components described above, the adhesive coating composition may include a solvent to facilitate the coating and uniformly disperse the components. Solvents may include water, alcohol, etc. The solvent may be included in an amount of 200 to 2000 parts by weight per 100 parts by weight of the mixed resin.

In an embodiment of the present invention, the electrical steel sheet structure is provided.

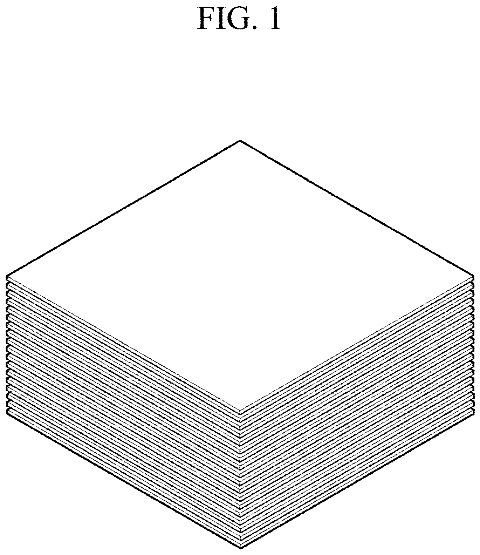

The electrical steel sheet structure according to one embodiment of the present invention includes a plurality of electrical steel sheets; and a fusion layer positioned between the plurality of electrical steel sheets. Fig. 1 shows a schematic diagram of an electrical steel sheet structure according to one embodiment of the present invention. As shown in FIG. 1, it is a form in which multiple electrical steel sheets are stacked.

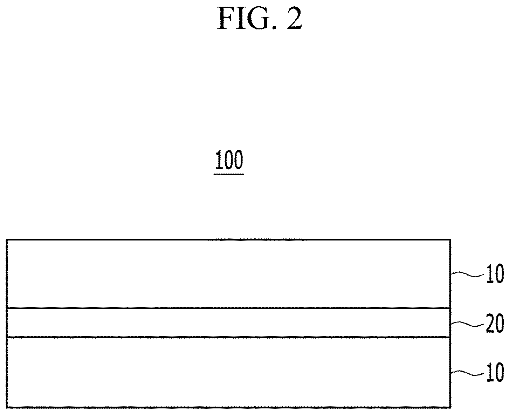

FIG. 2 is a schematic diagram of a cross-section of an electrical steel sheet structure according to one embodiment of the present invention. As shown in FIG. 2, an electrical steel sheet structure 100 according to one embodiment of the present invention includes a plurality of electrical steel sheets 10; and a fusion layer 20 positioned between the plurality of electrical steel sheets.

The electrical steel sheet structure according to one embodiment of the present invention may be a structure in which the different electrical steel sheets are heat-fused by simply forming the fusion layer using the aforementioned adhesive coating composition without using conventional methods such as welding, clamping, or interlocking.

At this time, the electrical steel structure has excellent properties of high-temperature adhesiveness and high-temperature oil resistance even after heat fusion.

Below, each component is explained in detail.

The electrical steel sheet 10 can be used without a limitation as a general non-oriented or an oriented electrical steel sheet. In one embodiment of the present invention, the main configuration is to form the fusion layer 20 between the plurality of electrical steel sheets 10 to manufacture the electrical steel sheet structure 100, so the detailed description of the electrical steel sheets 10 is omitted. More specifically, the electrical steel sheet 10 may be a non-oriented electrical steel sheet.

The fusion layer 20 is formed between the plurality of electrical steel sheets 10, and has the strong adhesive strength that allows the plurality of electrical steel sheets 10 to be bonded without using conventional fastening methods such as welding, clamping, or interlocking.

The fusion layer 20 is formed by coating an adhesive coating composition on the surface, curing it to form an adhesive coating layer, and stacking and thermally fusion-bonding the same to form the fusion layer 20. When the plurality of electrical steel sheets 10 having the adhesive coating layer formed thereon are stacked and heat-fused, the resin component within the adhesive coating layer is heat-fused to form the fusion layer.

In one embodiment of the present invention, the fusion layer 20 includes a mixed resin of an urethane resin and an epoxy resin. Since the urethane resin, the epoxy resin and the mixed resin thereof have been described in detail with respect to the adhesive coating composition, the redundant description is omitted. During the process of forming the fusion layer, the chemical structure and ratio of the urethane resin and epoxy resin remain unchanged. In addition, the coupling agent, the curing agent, the curing catalyst and wetting additives may also remain, and the content ranges thereof may be the same as those of the adhesive coating composition. Since the coupling agent, the curing agent, the curing catalyst and the wetting additives have been described in detail with respect to the adhesive coating composition, the redundant descriptions are omitted.

The fusion layer 20 may include 20 to 80 parts by weight of the urethane resin and 20 to 80 parts by weight of the epoxy resin based on 100 parts by weight of the mixed resin.

In addition, the fusion layer 20 may further include 0.2 to 3 parts by weight of the coupling agent, 0.05 to 0.5 parts by weight of the wetting agent, 0.5 to 2 parts by weight of the curing agent, and 0.1 to 1 part by weight of the curing catalyst.

The thickness of the fusion layer 20 may be 1 µm to 8µm 1. If the thickness of the fusion layer is too thin, the adhesive strength may decrease rapidly, and if it is too thick, defect due to the stickiness may become a problem after the coating is wound. More specifically, the thickness of the fusion layer (20) may be 1 *µ*m to 3 *µ*m.

In one embodiment of the present invention, the electrical steel laminate has improved the film close contacting property, the peel adhesion, and the ATF resistance. When the drive motor is used in an automobile, a lot of heat is generated when it rotates at high speed for a long time, so an ATF (Automotive Transmission Fluid) is used to cool it. Therefore, in order to secure the adhesive reliability during long-term use, it is important to maintain the adhesive strength of the stacked coil while impregnated in high-temperature ATF.

A method for manufacturing an electrical steel structure according to one embodiment of the present invention includes applying an adhesive coating composition to one surface or both surfaces of an electrical steel sheet and then curing it to form an adhesive coating layer; and stacking a plurality of electrical steel sheets on which the adhesive coating layers are formed and thermally fusing them to form a fusion layer.

Hereinafter, each step is explained in detail.

First, the adhesive coating composition is prepared. Since the adhesive coating composition has been described above, the redundant description is omitted.

Next, the adhesive coating composition is coated on the surface of the electrical steel sheet and then cured to form an adhesive coating layer. This step may be performed at a temperature range of 150 to 250 ° C for curing the adhesive coating composition.

A plurality of electrical steel sheets having the adhesive coating layer formed thereon are stacked and heat-fused to form the fusion layer 20. Through the thermal fusing, the polymer components within the adhesive coating layer are thermally fused to form the fusion layer.

The thermal fusion may be performed under the conditions of a temperature of 150 to 250°C, a pressure of 0.05 to 5.0 MPa, and a pressurization time of 0.1 to 120 minutes. The above conditions may be satisfied independently, and two or more conditions may be satisfied simultaneously. By controlling the temperature, pressure, and time conditions in the heat-fusion, the dense heat-fusion may be achieved between the electrical steel sheets without a gap or an organic phase.

The thermal fusion includes a temperature-elevating and a fusion, and the temperature-elevating speed of the temperature-elevating may be from 10°C/min to 1000°C/min.

Hereinafter, embodiments of the present invention will be described in detail so that a person having ordinary skill in the art to which the present invention pertains can easily implement the present invention. However, the present invention may be implemented in various different forms and is not limited to the embodiments described herein.

### Example 1

A non-oriented electrical steel sheet (50 X 50 mm, 0.35mmt) was prepared as a specimen. The adhesive coating solution was applied to the upper and lower portions of each prepared blank specimen at a constant thickness using a bar coater and a roll coater, cured at 200°C for 20 seconds based on a plate temperature, and then slowly cooled in air to form an adhesive coating layer.

The adhesive coating solution was used including 100 parts by weight of a mixed resin of a polyurethane resin and an epoxy resin, 0.5 parts by weight of a silane coupling agent (3-glycidoxypropyl triethoxysilane), 0.1 parts by weight of a silicone-based wetting agent (polyether-modified siloxane), 1 part by weight of a dicyandiamide-based curing agent (adipic acid dihydrazide), and 0.5 parts by weight of an imidazole-based curing catalyst (1,2 dimethylimidazole).

The polyurethane resin was manufactured and used by reacting 40 wt% of 2,4-methylene diphenyl diisocyanate monomer and 60 wt% of polyethylene carbonate diol having a water molecular weight of 425 g/mol, based on the total weight of the polyurethane resin. The epoxy resin used was a bisphenol A-based epoxy resin having a molecular weight of 10,000 and a hydroxyl value of 10 mgKOH/g.

The content ratios of the polyurethane resin and epoxy resin used, and the types and content ratios of the isocyanate monomer and polyol used in the production of the polyurethane resin are as shown in Table 1 below.

MDI in Table 1 stands for methylene diphenyl diisocyanate, TDI stands for toluene diisocyanate, and PCD stands for polyethylene carbonate diol (water molecular weight 425 g/mol).

The electrical steel sheets coated with the adhesive coating layer were stacked to a height of 20 mm, and then heat-fused at 160°C for 10 minutes under a pressure of 0.5 MPa to manufacture an electrical steel structure. The thickness of the fusion layer after the thermal fusion was approximately 3 *µ*m. The heat-fused structure was evaluated according to the mixing ratio of the mixed resin in the coating composition and the type of the aromatic diisocyanate monomer used. Specifically, the film close contacting property, the peel adhesion (T-peel, N/mm), the ATF resistance, and the high-temperature adhesion were evaluated and shown in Table 1 below.

The measurement method for each characteristic is as follows.

Method for measuring the film close contacting property: a specimen specification for measuring the film close contacting property was prepared according to ISO 1519. The coated specimen is manufactured into a sample of 30 x 300 mm, bent by 180° to fit an iron cylinder having 10 mm diameter, and a tape is adhered to that area, and then the presence or absence of the peeling of the coating layer is visually observed. If the peeling occurred, it was evaluated as NG, and if the peeling did not occur, it was judged as OK.

Peel adhesion (T-peel, N/mm): the specimen specification for measuring the peel method (T-peel off) was prepared according to ISO 11339. Two 25 x 200 mm specimens were bonded to an area of 25 x 150 mm2, and the unbonded area was bent by 90° to produce a T-shaped tensile specimen. The tensile force was measured using a device that measures the tension of the stacked sample by fixing the specimen manufactured by the T-Peeloff method to upper and lower jigs with a certain force and then pulling it at a certain speed. At this time, in the case of a shear method, the measured value was the point at which the interface with the minimum adhesive force among the interfaces of the stacked samples was detached. The temperature of the specimen was maintained at 60°C using a heating device, and then the adhesive strength was measured.

Evaluation method of the ATF resistance: the manufactured stacked coil was immersed in ATF (SP4M-1) at 160°C for 1000 hours and then the shear adhesion was tested. The shear adhesion for measuring the ATF resistance was measured by a shear strength method. The specimen specifications for the shear method measurements were prepared according to ISO 4587. Two 25 x 100 mm specimens were bonded to an area of 12.5 x 25 mm2 and heat-fused under the above conditions to produce the specimens for the shear method. The tensile force was measured using a device that measures the tension of the stacked sample by fixing the specimen manufactured by the shear method to the upper and lower jigs with a constant force and pulling it at a constant speed. At this time, in the case of the shear method, the measured value was the point at which the interface with the minimum adhesive force among the interfaces of the stacked samples was detached.

Evaluation of the high temperature adhesion: a shear adhesion to measure the high temperature adhesion was measured using a shear strength method. The specimen specifications for the measurement of the shear method were prepared according to ISO 4587. Two 25 x 100 mm specimens were bonded to the area of 12.5 x 25 mm2 using a coating agent and heat-fused under the conditions described above to produce the shear specimens. The specimens manufactured by the shear method were fixed to the upper and lower jigs (JIG) at a constant force after setting the high temperature atmosphere temperature in a tensile machine with a heating furnace, and the tensile force of the stacked sample was measured using a device that measures the tensile strength while pulling at a constant speed. At this time, in the case of the shear method, the measured value was the point at which the interface with the minimum adhesive force among the interfaces of the laminated samples was detached. The temperature of the specimen was maintained at 180°C using a heating device, and then the adhesive strength was measured.

**[Table 1]**

| Division | Mixed resin (100 parts by weight) | | Polyurethane resin | | | | Film close contacting property | Peel adhesive strength (N/mm) | ATF resistance (MPa) | High temperature adhesive strength (MPa) |
|---|---|---|---|---|---|---|---|---|---|---|
| | Polyurethane resin (parts by weight) | Epoxy resin (parts by weight) | Aromatic diisocyanate | | Polyol | | | | | |
| | | | Kind | Content (wt%) | Kind | Content (wt%) | | | | |
| Embodiment 1 | 70 | 30 | 2,4'-MDI | 40 | PCD | 60 | OK | 1.5 | 5.0 | 3 |
| Embodiment 2 | 50 | 50 | 2,4'-MDI | 40 | PCD | 60 | OK | 1.0 | 4.0 | 2 |
| Embodiment 3 | 30 | 70 | 2,4'-MDI | 40 | PCD | 60 | OK | 0.7 | 3.0 | 1.5 |
| Comparative Example 1 | 100 | 0 | 2,4'-MDI | 40 | PCD | 60 | OK | 3.5 | 0.5 | 0.1 |
| Comparative Example 2 | 0 | 100 | - | - | - | - | OK | 0.1 | 8.0 | 9 |
| Comparative Example 3 | 70 | 30 | 2,4'-TDI | 30 | PCD | 70 | OK | 0.3 | 3.0 | 2.5 |
| Comparative Example 4 | 70 | 30 | 2,2' - MDI | 40 | PCD | 60 | OK | 0.4 | 2.5 | 2.0 |
| Comparative Example 5 | 70 | 30 | 4,4' - MDI | 40 | PCD | 60 | OK | 0.4 | 1.5 | 0.7 |
| Comparative Example 6 | 50 | 50 | 2,4'-TDI | 30 | PCD | 70 | OK | 0.2 | 3.5 | 3.2 |
| Comparative Example 7 | 50 | 50 | 2,2' - MDI | 40 | PCD | 60 | OK | 0.3 | 3.2 | 3.0 |
| Comparative Example 8 | 50 | 50 | 4,4' - MDI | 40 | PCD | 60 | OK | 0.4 | 1.7 | 2.0 |
| Comparative Example 9 | 30 | 70 | 2,4'-TDI | 30 | PCD | 70 | OK | 0.2 | 4.0 | 3.3 |
| Comparative Example 10 | 30 | 70 | 2,2' - MDI | 40 | PCD | 60 | OK | 0.3 | 3.3 | 3.5 |
| Comparative Example 11 | 30 | 70 | 4,4' - MDI | 40 | PCD | 60 | OK | 0.3 | 1.8 | 2.0 |
| Comparative Example 12 | 50 | 50 | 2,4'-MDI | 40 | PPG | 60 | OK | 1.0 | 2.0 | 0.5 |

As shown in Table 1, when polyurethane resin and epoxy resin were mixed and used in an appropriate content ratio as in Embodiments 1 to 3 and 2,4'-MDI (2,4-methylene diphenyl diisocyanate) was used as the aromatic diisocyanate monomer, excellent properties were exhibited in the film close contacting property, the peel adhesion, the ATF resistance, and the high-temperature adhesion.

Comparative Example 1 is a case where only the urethane resin was used without mixing the epoxy resin. In this case, it may be confirmed that the peeling adhesion is excellent, but the high-temperature adhesion and the ATF resistance are inferior, showing the values of less than 1 MPa.

Comparative Example 2 is a case where only the epoxy resin was used without mixing the urethane resin. In this case, the high-temperature adhesive strength and the ATF resistance were excellent, but peel adhesive strength showed a value of less than 0.5, confirming that the adhesive strength was poor.

Comparative Examples 3 to 11 are to manufacture the adhesive coating layers by changing the aromatic diisocyanate monomer in Examples 1 to 3 in to a compound other than 4'-MDI (2,4-methylene diphenyl diisocyanate).

In Comparative Examples 3, 6, and 9 using 2,4'-TDI (2,4-toluene diisocyanate) as an aromatic diisocyanate, it may be confirmed that the film close contacting property, the ATF resistance, and the high-temperature adhesion are good, but the peel adhesion is inferior to that of the examples.

In the case of Comparative Examples 4, 7 and 10 using 2,2'-MDI (2,2-methylene diphenyl diisocyanate) as an aromatic diisocyanate, it may be confirmed that the film close contacting property, the ATF resistance and the high-temperature adhesion are good, but the peel adhesion is inferior to that of the examples.

In Comparative Examples 5, 8, and 11 using 4,4'-MDI (4,4-methylene diphenyl diisocyanate) as an aromatic diisocyanate, it may be confirmed that the film close contacting property and high-temperature adhesion are good, but the peel adhesion and the ATF resistance are inferior to those of the examples.

Comparative Example 12 is an example using polypropylene glycol as a polyol compound. It may be confirmed that the film close contacting property, the peel adhesion, and the ATF resistance are good, but the high-temperature adhesion is poor.

Although exemplary embodiments of the present invention were described above, those skilled in the art would understand that the present invention may be implemented in various ways without changing the spirit or necessary features. Therefore, the embodiments described above are only examples and should not be construed as being limitative in any respects.

### [Description of symbols]

100 : electrical steel sheet structure 10 : electrical steel sheet
20 : fusion layer

## Claims

1. An electrical steel plate adhesive coating composition, comprising:
a mixed resin of an urethane resin and an epoxy resin,
wherein the urethane resin includes a repeating unit represented by Chemical Formula 1 and Chemical Formula 2. 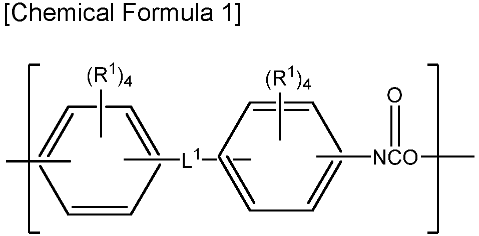 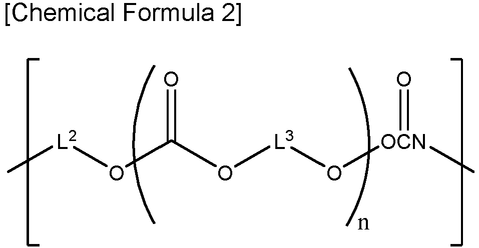
(In Chemical Formula 1 and Chemical Formula 2, R¹ each independently represents hydrogen, deuterium, a substituted or unsubstituted C1 to C10 alkyl group, a substituted or unsubstituted C6 to C20 aryl group, a substituted or unsubstituted C5 to C20 heteroaryl group, a hydroxy group, or a halogen element. L¹, L², and L³ represent a single bond or a divalent linker, respectively. n represents an integer from 1 to 50).

2. The electrical steel plate adhesive coating composition of claim 1, wherein:
20 to 80 parts by weight of the urethane resin and 20 to 80 parts by weight of the epoxy resin are included based on 100 parts by weight of the mixed resin.

3. The electrical steel plate adhesive coating composition of claim 1, wherein:
the urethane resin includes the repeating unit represented by Chemical Formula 3 and Chemical formula 2. 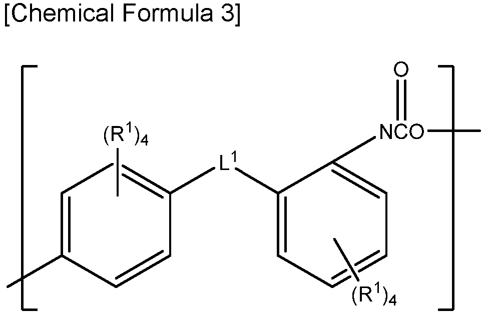
(In Chemical Formula 3, R¹ each independently represents hydrogen, deuterium, a substituted or unsubstituted C1 to C10 alkyl group, a substituted or unsubstituted C6 to C20 aryl group, a substituted or unsubstituted C5 to C20 heteroaryl group, a hydroxy group, or a halogen element. L¹ represents a single bond or a divalent linker).

4. The electrical steel plate adhesive coating composition of claim 1, wherein:
the urethane resin is formed by the reaction of a diisocyanate monomer and a polyol represented by Chemical Formula 4. 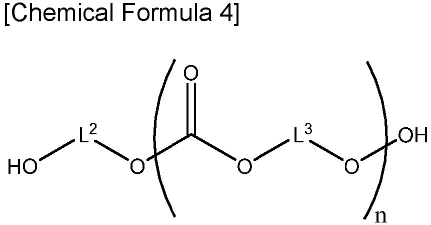
(In Chemical Formula 4 above, L² and L³ each represent a single bond or a divalent linking group. n represents an integer from 1 to 50).

5. The electrical steel plate adhesive coating composition of claim 4, wherein:
the diisocyanate monomer includes an aromatic diisocyanate monomer.

6. The electrical steel sheet adhesive coating composition of claim 5, wherein:
wherein the aromatic diisocyanate monomer is a compound represented by Chemical Formula 5. 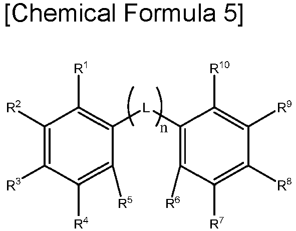
(In Chemical Formula 5, R¹ to R¹⁰ are each independently hydrogen, deuterium, a substituted or unsubstituted C1 to C10 alkyl group, a substituted or unsubstituted C6 to C20 aryl group, a substituted or unsubstituted C5 to C20 heteroaryl group, a hydroxy group, a halogen element, or an isocyanate group,
at least one of R1 to R5 is an isocyanate group,
at least one of R6 to R10 is an isocyanate group,
it is except when R3 and R8 are both isocyanate groups,
L is a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group, and
n is an integer between 1 and 10).

7. The electrical steel sheet adhesive coating composition of claim 1, wherein:
the epoxy resin has a number average molecular weight of 5,000 to 20,000 and a hydroxyl value of 2 to 20 mgKOH/g.

8. The electrical steel sheet adhesive coating composition of claim 1, further comprising:
an at least one selected from a group consisting of a coupling agent, a wetting agent, a curing agent, and a curing catalyst.

9. The electrical steel plate adhesive coating composition of claim 8, wherein:
0.2 to 3 parts by weight of the coupling agent is included based on 100 parts by weight of the mixed resin.

10. The electrical steel plate adhesive coating composition of claim 8, wherein:
the curing agent in an amount of 0.5 to 2 parts by weight is included based on 100 parts by weight of the mixed resin.

11. The electrical steel sheet adhesive coating composition of claim 8, wherein:
0.1 to 1 part by weight of the curing catalyst is included based on 100 parts by weight of the mixed resin.

12. The electrical steel plate adhesive coating composition of claim 8, wherein:
0.05 to 0.5 parts by weight of the wetting agent is included based on 100 parts by weight of the mixed resin.

13. An electrical steel sheet structure, comprising:
a plurality of electrical steel sheets; and
a fusion layer positioned between the plurality of electrical steel plates,
wherein the fusion layer includes a mixed resin of urethane resin and epoxy resin, and
the urethane resin includes a repeating unit represented by Chemical Formula 1 and Chemical Formula 2. 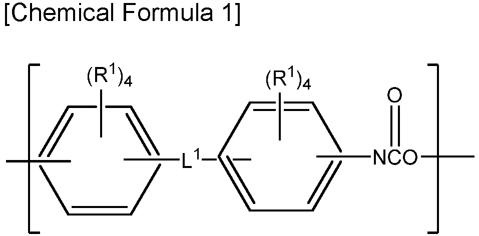 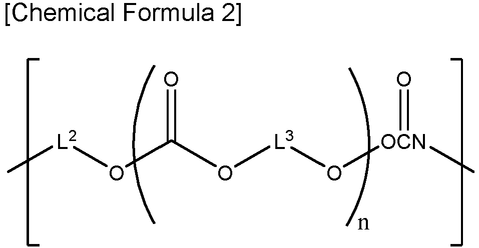
(In the above chemical formulas 1 and 2, R¹ each independently represents hydrogen, deuterium, a substituted or unsubstituted C1 to C10 alkyl group, a substituted or unsubstituted C6 to C20 aryl group, a substituted or unsubstituted C5 to C20 heteroaryl group, a hydroxy group, or a halogen element. L¹, L², L³ represent a single bond or a divalent linker, respectively. n represents an integer from 1 to 50).

14. The electrical steel plate structure of claim 13, wherein:
the fusion layer includes 20 to 80 parts by weight of the urethane resin and 20 to 80 parts by weight of the epoxy resin based on 100 parts by weight of the mixed resin.

15. A method for manufacturing an electrical steel structure, comprising:
coating the adhesive coating composition described in Claim 1 to one or both surfaces of an electrical steel sheet and then curing it to form an adhesive coating layer; and
stacking the plurality of electrical steel sheets having the adhesive coating layer formed thereon and thermally fusing them to form a fusion layer.
